# EUROPÄISCHE PATENTSCHRIFT

(11) **EP 1 715 151 B1**
(45) Veröffentlichungstag und Bekanntmachung des Hinweises auf die Patenterteilung: **19.09.2007**
(21) Anmeldenummer: 05008388.0
(22) Anmeldetag: 18.04.2005
(51) Int. Cl.: F01N 3/20, B01D 53/94, B01D 53/90

(54) **Heizvorrichtung und thermischer Reaktor zur Erwärmung und Vergasung von Harnstoff**
Heating device and thermal reactor for heating and vaporizing urea
Dispositif de chauffage et réacteur thermique pour chauffer et vaporiser de l'urée

(43) Veröffentlichungstag der Anmeldung: 25.10.2006
(73) Patentinhaber: DBK David + Baader GmbH, 76870 Kandel (DE)
(72) Erfinder: Gschwind, Thomas, 67098 Bad Dürkheim (DE)
(74) Vertreter: Grünecker, Kinkeldey, Stockmair & Schwanhäusser Anwaltssozietät

(56) Entgegenhaltungen:
- EP-A- 1 481 719
- US-A1- 2003 070 424
- US-B1- 6 361 754

## Beschreibung

Die Erfindung betrifft eine Heizvorrichtung zur Erwärmung und Vergasung von Harnstoff oder einer Harnstofflösung, insbesondere für Verbrennungskraftmaschinen, die in eine sich in einer Strömungsrichtung erstreckende Gasstoffleitung einbaubar ausgestaltet ist und die wenigstens zwei in Strömungsrichtung voneinander beabstandete, gasdurchlässige Heizflächen aufweist, die eine Heizkammer begrenzen.

Die Erfindung betrifft außerdem einen thermischen Reaktor zur Erwärmung und Vergasung von Harnstoff oder einer Harnstofflösung, insbesondere für Verbrennungskraftmaschinen, umfassend eine Heizvorrichtung, eine Einströmöffnung, eine Ausströmöffnung, wobei die Einström- und die Ausströmöffnung durch eine Gasstoffleitung miteinander verbunden sind und in der Gasstoffleitung ein Vergasungsbereich angeordnet ist.

Ferner betrifft die Erfindung ein Verfahren zum Erwärmen und Vergasen von Harnstoff oder einer Harnstofflösung, insbesondere für Verbrennungskraftmaschinen, wobei eine Gasstoffleitung von einem Gasstrom in einer Strömungsrichtung durchströmt wird, in den Gasstrom Festharnstoff oder eine Harnstofflösung eingebracht wird und der Festharnstoff oder die Harnstofflösung erwärmt und verdampft und mit dem Gasstrom abtransportiert wird.

Derartige thermische Reaktoren und Heizvorrichtungen werden eingesetzt, um die Abgase von Verbrennungskraftmaschinen, wie beispielsweise Dieselmotoren, von Stickoxiden zu reinigen. Die Reinigung erfolgt nach dem sogenannten SCR (selective catalytic reduction: selektive katalytische Reduktion)-Verfahren. Bei dem SCR-Verfahren werden die Stickoxide in einem Katalysator unter Beteiligung eines geeigneten Reduktionsmittels chemisch in Stickstoff und Wasser umgesetzt. Als Reduktionsmittel wird häufig dampf- bzw. gasförmiger Ammoniak verwendet, der durch Verdampfung, nachfolgende Thermolyse und Hydrolyse aus Harnstoff oder einer Harnstofflösung erzeugt und in den Abgasstrom eingebracht wird.

Eine Heizvorrichtung zum Verdampfen und zur Thermolyse einer Harnstofflösung ist beispielsweise in der DE 40 38 054 A1 beschrieben. Der Verdampfer der Heizvorrichtung besteht aus einem dreigeteilten Metallwabenkörper, der von den heißen Abgasen indirekt oder direkt elektrisch beheizt werden kann und der in der Abgasleitung stromauf des eigentlichen SCR-Katalysators angeordnet ist. Die Harnstofflösung wird über eine Fluidleitung mit einer Düse, die stromauf des Verdampfers in der Abgasleitung mündet, in den Abgasstrom eingebracht. Mittels der Düse wird die Harnstofflösung in Strömungsrichtung des Abgases auf den Verdampfer aufgesprüht. Nachteilig bei der Vorrichtung der DE 40 38 054 A1 ist der große Platzbedarf des Verdampfers sowie die ungleichmä-βige Vermischung der versprühten Harnstofflösung.

Das Problem der ungleichmäßigen Verteilung wird in der DE 42 03 807 A1, einer Weiterentwicklung der DE 40 38 054 A1, dadurch gelöst, dass ein mehrteiliger Verdampfer stromab der in die Gasstoffleitung mündenden Düse eingesetzt wird. Die einzelnen Teilverdampfer weisen Schlitze auf, welche den Abgasstrom radial zur Strömungsrichtung ablenken und durchmischen. Beim Verdampfer dieser Druckschrift sind mehrere Teilverdampfer so hintereinander angeordnet, dass zwischen den Teilverdampfern ein Spalt entsteht. Dieser Spalt stellt einen Durchmischungsraum dar, in welchem die in den Teilverdampfern erzeugte radiale Strömung intensiviert wird.

Nachteilig an wässrigen Harnstofflösungen ist, dass diese im Vergleich zu trockenem Festharnstoff ein höheres Gewicht und größeres Volumen beanspruchen. Ferner frieren Harnstofflösungen bei niedrigen Temperaturen von unter -12°C, so dass die Vorratsbehälter und die Transport- bzw. Dosiersysteme bei tiefen Temperaturen beheizt werden müssen. Ein weiterer Nachteil von Harnstofflösungen ist, dass zusätzliche Energie für die Verdampfung des Lösungsmittels Wassers aufgebracht werden muss.

Anstelle der wässrigen Harnstofflösung schlägt beispielsweise die DE 102 06 028 A1 den Einsatz von trockenem Harnstoff als Ausgangsstoff des Reduktionsmittels beim SCR-Verfahren vor. Der Trockenharnstoff kann als Granulat, Pulver oder Prills aus einem Vorratsbehälter dosiert und mit Druckluft dem thermischen Reaktor zugeführt werden. Der Reaktor dient zur Ammoniakerzeugung und umfasst eine beheizbare Kammer mit einer Thermolyse- und einer Hydrolysezone. In der Thermolysezone ist eine elektrische Heizvorrichtung angeordnet, welche den Festharnstoff verdampft und thermisch zersetzt. Nachteilig bei der Thermolysezone der DE 102 06 028 A1 ist, dass die Vergasung des Festharnstoffes bei einer ungleichmäßigen Temperaturverteilung in einer Reaktionskammer mit lediglich einer beheizten Metallfläche stattfindet. Ferner muss der erzeugte Ammoniak bei dieser Vorrichtung über eine gesonderte Gasleitung erst in den Abgasstrom eingebracht werden. Somit ist es nicht möglich, den Reaktor der DE 102 06 028 A1 direkt in die Gasstoffleitung zu integrieren.

Der Erfindung liegt daher die Aufgabe zugrunde, Heizvorrichtungen, thermische Reaktoren und Verfahren zur Erwärmung und Vergasung von festem Harnstoff oder Harnstofflösungen weiter zu entwickeln und durch eine schnelle Reaktionszeit der Heizkammer sowie einer gleichmäßigen Temperaturverteilung in der Heizkammer bereits kurz nach Einschalten der Heizvorrichtung eine stabile Vergasung von Harnstoff in der Abgasleitung zu erreichen.

Diese Aufgabe wird für die eingangs genannte Heizvorrichtung erfindungsgemäß durch eine zwischen den wenigstens zwei Heizflächen in die Heizkammer mündende Einlassöffnung, durch welche der Harnstoff oder die Harnstofflösung in die Heizkammer einbringbar ist, gelöst.

Für den thermischen Reaktor wird diese Aufgabe erfindungsgemäß dadurch gelöst, dass die Heizvorrichtung eine im Vergasungsbereich angeordnete Heizkammer aufweist, die einströmseitig und ausströmseitig von gasdurchströmbaren Heizflächen begrenzt ist und zwischen den Heizflächen eine Einlassöffnung für den Harnstoff oder die Harnstofflösung aufweist.

Für das zu Beginn beschriebene Verfahren wird diese Aufgabe dadurch gelöst, dass der Harnstoff oder die Harnstofflösung zwischen zwei Heizflächen in die Gasstoffleitung eingebracht wird.

Diese überraschend einfachen Lösungen haben den Vorteil, dass die Heizkammer mindestens von den zwei Seiten beheizt wird, an welchen die Heizflächen angeordnet sind, und die notwendige Vergasungstemperatur zur Thermolyse von Festharnstoff oder einer Harnstofflösung daher bereits kurz nach Einschalten der Heizvorrichtung erreicht wird. Mit Heizfläche ist dabei ein ebener Körper gemeint, der Wärme an den Gasstoff oder den Harnstoff bzw. die Harnstofflösung abgibt. Ferner sorgt die mehrseitige Beheizung der Heizkammer, welche den zwischen den wenigstens zwei Heizflächen in der Gaskammer liegenden Raum darstellt, eine gleichmäßige Temperaturführung in der Kammer. Der einfache Aufbau der Heizvorrichtung gestattet es, Gasstoffleitungen, beispielsweise Abgasleitungen von Verbrennungskraftmaschinen, mit der erfindungsgemäßen Heizvorrichtung nachzurüsten oder einen erfindungsgemäßen Reaktor nachträglich in die Leitungen zu integrieren.

Die solchermaßen verbesserten Heizvorrichtungen, thermischen Reaktoren und Verfahren können durch verschiedene, voneinander unabhängige, jeweils für sich vorteilhafte Ausgestaltungen weiter entwickelt sein. Auf diese Ausgestaltungen und die mit den Ausgestaltungen jeweils verbundenen Vorteile wird im Folgenden kurz eingegangen.

So können in einer vorteilhaften Ausgestaltung der erfindungsgemäßen Heizvorrichtung die Heizflächen sich in einer im Wesentlichen senkrecht zur Strömungsrichtung verlaufenden Ebene erstrecken. Dies bietet den Vorteil einer besonders platzsparenden Vorrichtung. Die Höhe der Heizkammer entspricht dem Abstand der beiden Heizflächen und kann an für die jeweiligen Anforderungen der unterschiedlichen Harnstoffformen, wie Lösung, Granulat, Pulver oder Pellets, optimiert werden. Auf diese Weise kann beispielsweise die Höhe der Heizkammer an den Durchmesser von trockenen Harnstoffpellets angepasst werden.

Um die bekannten Probleme von Harnstofflösungen zu vermeiden, ist es für das Verfahren vorteilhaft, Festhamstoff oder eine feste Harnstofflösung zu vergasen. Bei Festhamstoff bietet sich insbesondere an, den Festharnstoff oder die feste Harnstofflösung in Form von Pellets zu vergasen.

Bei dem erfindungsgemäßen Verfahren ist es ferner möglich, den Harnstoff oder die Harnstofflösung im Wesentlichen orthogonal zur Strömungsrichtung zwischen die Heizflächen der Heizkammern in die Gasleitung einzubringen. Hierbei ist vorteilhaft, dass komplizierte und aufwendige Leitungen entfallen, die bei den Vorrichtungen der DE 40 38 054 A1 oder der DE 40 03 807 A1 noch notwendig sind, um den Harnstoff parallel zum Gasstrom einzubringen.

Weiterhin kann bei einer vorteilhaften Weiterbildung die Heizvorrichtung wenigstens zwei Heizelemente umfassen, wobei jede der Heizflächen jeweils einem separaten Heizelement zugeordnet ist. Die Heizfläche zur Wärmeabgabe und das Heizelement, welches die Wärme erzeugt, sind Teile einer Heizeinheit, welche außerdem noch ein Trägerelement bzw. ein Befestigungsmittel der Heizfläche und elektrische Kontaktelemente umfassen kann. Diese Ausführung ist vorteilhaft, weil die beiden Heizflächen von den Heizelementen der separaten Heizeinheiten unabhängig voneinander beheizbar sind. Der Gasstoffstrom, welcher zuerst einströmseitigen Heizfläche passiert und von dieser erwärmt wird, kühlt die einströmseitige Heizfläche stärker ab als die ausströmseitige Heizfläche, die von bereits erwärmter Luft durchströmt wird. Diese Ausführungsform ermöglicht es nunmehr, die beiden Heizflächen unabhängig voneinander zu regeln und eine gleichmäßige Temperaturverteilung in der Heizkammer gewährleisten.

Insbesondere ist es vorteilhaft, den Harnstoff bei mindestens 400°C zu zersetzen, damit sich keine schädlichen Ablagerungen des Festharnstoffes oder der Harnstofflösung an den Heizflächen absetzen.

Alternativ können die beiden Heizflächen auch einem einzigen Heizelement zugeordnet sein, wodurch die Notwendigkeit eines zweiten Heizelementes nebst dessen Kontaktstelle entfällt. Auch bei dieser Ausführung könnten die beiden Heizflächen unterschiedliche Heizleistungen erzeugen, beispielsweise durch die Anordnung des Heizelementes oder indem sich die wärmeabgebende Fläche der beiden Heizwände unterscheidet.

Gasdurchlässige Heizflächen können besonders einfach hergestellt werden, indem wenigstens eine der Heizflächen zumindest abschnittsweise von einer Heizspirale ausgebildet wird. Alternativ kann auch ein Heiznetz, Heizgitter oder ein Heizmäander verwendet werden. Der Vorteil einer Heizspirale ist, dass durch die Wicklung der Spirale die lichte Weite der Gasdurchlassöffnungen sehr einfach auf gewünschte Werte eingestellt werden kann.

Es hat sich als besonders vorteilhaft herausgestellt, wenn eine Heizspirale ein aufgerolltes Heizband oder einen aufgerollten Rohrheizkörper umfasst. Gemäß dieser Ausführungsform steht eine besonders große Wärmfläche für einen effektiven Wärmeübergang vom Heizelement auf den Abgasstrom bzw. den Harnstoff zur Verfügung. Ferner ist hierbei die Heizspirale gleichzeitig Heizfläche und Heizelement, so dass weniger Bauteile erforderlich sind.

Ein weiterer Vorteil einer Heizspirale, die ein aufgerolltes Heizband oder einen aufgerollten Rohrheizkörper umfasst, liegt darin, dass neben ebenen zweidimensionalen Spiralen auch Schrauben bzw. helixförmige dreidimensionale Raumstrukturen ausgebildet werden können. Somit besteht die Möglichkeit, gemäß einer weiteren vorteilhaften Ausführungsform, aus einem einzigen Rohrheizkörper oder Heizband zwei in Strömungsrichtung voneinander beabstandete ebene Heizspiralen auszubilden, die über einen schraubartigen Abschnitt verbunden sind. Somit entsteht eine allen Seiten beheizbare Heizkammer, da die Mantelfläche der Kammer vom schraubförmigen Abschnitt des Heizbandes aus radialer Richtung beheizt werden kann.

Eine weiter Möglichkeit, die Heizkammer aus radialer Richtung zu beheizen ist gemäß einer weiteren Ausführung dann gegeben, wenn eine Wärmesenke vorgesehen ist, welche die Heizkammer mantelförmig umgibt und in Wärmeübertragungsverbindung mit wenigstens einem Heizelement steht. Ferner kann wenigstens eine Heizfläche von einer Wärmesenke gebildet sein, so dass die Wärmesenke in Wärmeübertragungsverbindung mit wenigstens einem Heizelement steht. Es ist besonders vorteilhaft, wenn die Wärmesenke einteilig wenigstens eine Heizfläche und einen Abschnitt der Mantelfläche der Heizkammer ausbildet. Auf diese Weise beheizt die Wärmesenke sowohl eine Heizfläche als auch den Mantel der Heizkammer.

Wird Festharnstoff in Gestalt eines Granulats oder Pellets eingesetzt, so können die Heizflächen Gasdurchlassöffnungen mit einer lichten Weite aufweisen, die kleiner als die lichte Weite der Einführöffnung ist. Gemäß dieser vorteilhaften Ausführung wird der Harnstoff oder die Harnstofflösung im Wesentlichen zwischen den zwei Heizflächen verdampft, da der eingebrachte Harnstoff größere geometrische Abmessungen aufweist als die Gasdurchtrittsöffnungen der Heizflächen. Somit bilden die Heizflächen ein Heizsieb, wodurch der Harnstoff in der Heizkammer zurückgehalten und erwärmt wird und lediglich der verdampfte Harnstoff bzw. die bei der Verdampfung entstehenden gasförmigen Zersetzungsprodukte Ammoniak und Isocyansäure mit dem Gasstoffstrom aus der Heizkammer abtransportiert werden.

Um die lichte Weite der Gasdurchströmungsöffnungen festzulegen und auch während des Betriebs der Heizvorrichtung konstant zu halten, kann wenigstens eine der Heizflächen aus einer Mehrzahl von benachbarten Heizabschnitten bestehen, die durch Abstandshalter voneinander beabstandet sind und so die Gasdurchströmungsöffnungen bilden. Verwendet man beispielsweise auf sich zurückgebogenen Heizflächen, wie Heizspiralen oder Heizmäander, ist es möglich, die Abstandshalter zwischen benachbarten, zueinander gerichteten Flächen der Heizkörper in den Öffnungen anzubringen. Hierbei bestimmen die Abstandshalter nicht nur die lichte Weite der Durchströmungsöffnungen, sondern sorgen zusätzlich dafür, dass sich benachbarte Bereiche der Heizflächen nicht berühren und einen Kurzschluss in stromdurchflossenen Heizflächen auslösen. Daher ist es vorteilhaft, Abstandshalter aus einem isolierenden Material einzusetzen.

In einer weiteren vorteilhaften Ausgestaltung können in der Heizfläche sich auswölbende Bereiche von Profilierungen als Abstandshalter ausgeformt sein. Durch die geringe Potenzialdifferenz von benachbarten Abschnitten der Heizflächen, z. B. einzelnen Schleifen einer Heizspirale, kommt es zu keinem Spannungsüberschlag, so dass der Einsatz isolierender Abstandshalter nicht notwendig ist. Werden in der Heizfläche auswölbende Bereiche geprägt, beispielsweise in Form von Sicken, kann auf die Anbringung von Abstandshaltern verzichtet werden. Ferner führen Profilierungen zu einer vergrößerten Heizfläche und einer höheren Festigkeit.

Um die Vergasung des Harnstoffes zu verbessern, können gemäß einer weiteren vorteilhaften Ausführungsform die Heizflächen Strömungselemente bilden, durch welche im Betrieb die Durchströmung der Heizkammer verwirbelbar ist. Die Verwirbelungen sorgen für eine bessere Durchmischung der Abgasluft bzw. der ausgasenden Bestandteile des Harnstoffes und verbessern den Wärmeübergang von den Heizflächen auf die Gasströmung und den Harnstoff. So können beispielsweise die Heizbänder einer als Heizfläche ausgeformten Heizspirale oder eines Heizmäanders oder die als Gasdurchlassöffnungen dienenden Bohrungen eines Heizbleches, nicht parallel zu der Gasströmungsrichtung liegen, sondern zur Durchströmungsrichtung geneigt sein. Dies hat zur Folge, dass der Gasstrom an den Heizflächen umgelenkt und verwirbelt wird.

Werden isolierende Abstandshalter oder die Abstandshalter bildende Prägungen der Heizflächen eingesetzt, so können diese Abstandshalter ebenfalls geneigt zur Strömungsrichtung als Strömungselemente angeordnet sein. In diesem Fall wird der Gasstrom nicht an den Heizflächen, sondern an den schräg zur Strömungsrichtung gestellten Abstandshaltern umgelenkt und verwirbelt. Die Ablenkungsrichtung kann auf besonders einfache Weise durch die Form und die Ausrichtung der Abstandshalter beeinflusst werden.

Auch der thermische Reaktor zur Vergasung von Festharnstoff oder einer Harnstofflösung kann dadurch vorteilhaft weitergebildet werden, dass eine Heizvorrichtung gemäß der oben genannten Ausführungen eingesetzt wird.

Es ist insbesondere vorteilhaft, wenn die Gasstoffleitung im Vergasungsbereich eine Zuführöffnung aufweist, welche im Bereich der Heizkammer und insbesondere im Bereich der Einlassöffnung der Heizkammer mündet. Dadurch liegen Zuführöffnung der Gasleitung und Einlassöffnung der Heizkammer fluchtend in einer Einführrichtung für den Harnstoff, so dass dieser auf sehr einfache Weise durch die Gasstoffleitung, also die Reaktorwand und die Einlassöffnung der Heizvorrichtung ins Innere der Heizkammer befördert werden kann.

In einer weiteren Ausführungsform des thermischen Reaktors kann die Heizvorrichtung die Gasstoffleitung des thermischen Reaktors zumindest teilweise bilden. Da hierbei die Heizvorrichtung bereits die gasstoffleitende Wand des Reaktors bildet, ist die Herstellung und Montage dieser Ausführungsform besonders vorteilhaft.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargelegt wurde.

Es zeigen:
- Fig. 1: eine schematische Außenansicht eines erfindungsgemäßen thermischen Reaktors;
- Fig. 2: die Ausführungsform des thermischen Reaktors aus Fig. 1 in einer Schnittdarstellung entlang der Linie A-A;
- Fig. 3: eine schematische Darstellung der Heizelemente aus der Fig. 1 und 2;
- Fig. 4A: eine schematische Darstellung einer Ausführungsform eines Heizbandes mit schräg verlaufenden Profilierungen;
- Fig. 4B: den Ausschnitt einer Heizspirale mit Abstandshaltern aus einer Aufsicht; und
- Fig. 5: eine zweite Ausführungsform der erfindungsgemäßen Heizvorrichtung; und
- Fig. 6: eine dritte Ausführungsform der erfindungsgemäßen Heizvorrichtung.

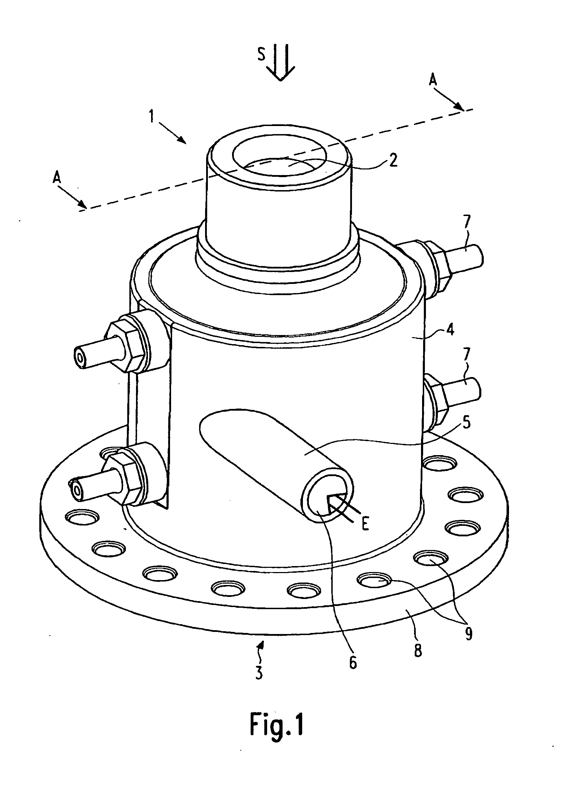

Zunächst wird der allgemeine Aufbau eines erfindungsgemäßen thermischen Reaktors 1 mit Bezug auf die Fig. 1 dargestellt.

Der erfindungsgemäße Reaktor 1 umfasst eine Einströmöffnung 2 und eine Ausströmöffnung 3, die durch eine Gasstoffleitung 4 miteinander verbunden sind. Die Gasstoffleitung 4 stellt die Reaktorwand dar und kann im Bereich der Einströmöffnung 2 mit einer Abgasleitung (nicht dargestellt), beispielsweise der Abgasleitung einer Verbrennungskraftmaschine verbunden werden. Die Abgase fließen somit in einer Strömungsrichtung S durch die Einlassöffnung 2 in den Zersetzungsreaktor 1.

Der Außendurchmesser des Reaktormantels 4 ändert sich in Strömungsrichtung von der Einström- 2 zur Ausströmöffnung 3. In einem ersten Einströmbereich, der unmittelbar auf die Einströmöffnung 2 folgt, ist der Durchmesser kleiner als im sich anschließenden zweiten Vergasungsbereich und dritten Ausströmbereich. Die Gasstoffleitung 4 weist im ersten Einströmbereich vor dem zweiten Vergasungsbereich eine konische Aufweitung auf.

Der Vergasungsbereich besitzt einen konstanten Durchmesser. In dieser Zone zur thermischen Zersetzung des Harnstoffs ist ein Anschlussstück 5 für eine Harnstoffzuführleitung (nicht dargestellt) ausgefertigt. Das Anschlussstück 5 ragt senkrecht zur Strömungsrichtung S in radialer Richtung rohrartig aus dem Vergasungsbereich der Gasstoffleitung 4 heraus. Das Anschlussstück enthält eine zentrale Zuführöffnung 6, die in der Gasleitung 4 mündet und durch welche der Harnstoff entlang einer Einführrichtung E in den Vergasungsbereich des Reaktors 1 eingebracht werden kann. An der inneren Wandung der Gasstoffleitung 4 mündet die Zuführöffnung 6 in einer Heizkammer 11 (in Fig. 1 nicht sichtbar), die einströmseitig und ausströmseitig von gasdurchströmbaren Heizflächen 10 (in Fig. 1 nicht sichtbar) begrenzt im Vergasungsbereich liegt.

Diese Anordnung ist der Fig. 1 dadurch zu entnehmen, dass die Zuführöffnung 6 des Anschlussstückes 5 zwischen den Kontaktstellen 7 von zwei separaten Heizeinheiten der Heizvorrichtung des thermischen Reaktors 1 aus der Gasleitung 4 herausragt.

Im dritten Ausströmbereich weist die Reaktorkammer 4 schließlich einen umlaufenden Befestigungsflansch 8 auf. Der umlaufende Flansch 8 ist in regelmäßigen Abständen mit Befestigungsöffnungen 9, die parallel zur Strömungsrichtung S in den Flansch 8 gefertigt sind, versehen. Somit kann der thermische Reaktor 1 in dieser Ausführungsform besonders einfach über den Befestigungsflansch 8 an ein Katalysatorgehäuse oder eine Gasstoffleitung gekoppelt werden.

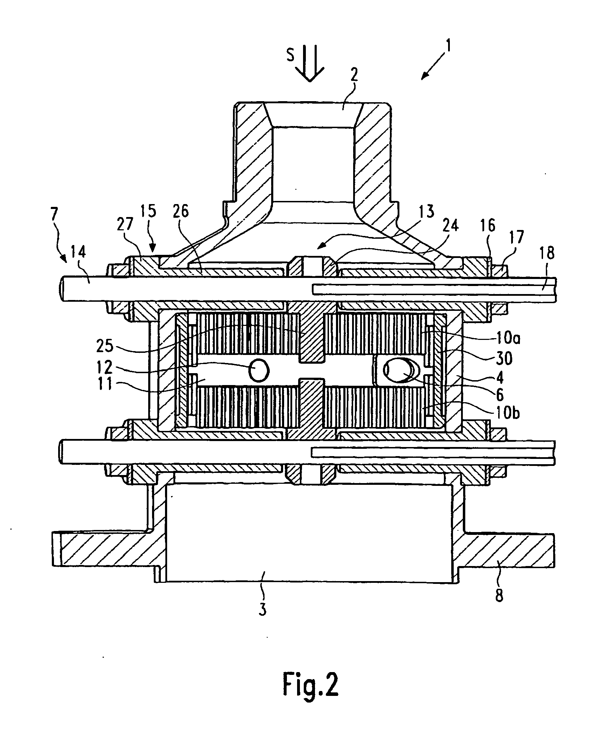

Fig. 2 zeigt eine Schnittdarstellung des Reaktors 1 der Fig. 1 entlang der Linie A-A und verdeutlicht sowohl die Anordnung als auch die elektrische Kontaktierung bzw. Isolierung der die Heizkammer 11 in der Gasleitung 4 bildenden Heizflächen 10a und 10b. In Fig. 2 werden für Elemente, deren Aufbau und/oder Funktion identisch oder ähnlich Elementen der Fig. 1 ist, dieselben Bezugszeichen wie in Fig. 1 verwendet.

Fig. 2 verdeutlicht, wie sich die Gasstoffleitung 4 im ersten Einströmbereich, der sich in Strömungsrichtung S von der Einströmöffnung 2 bis zur der einströmseitigen Heizfläche 10a erstreckt, zum zweiten Thermolysebereich hin diffusorartig aufweitet. Diese Konstruktion hat den Vorteil, dass die Strömungsgeschwindigkeit des Abgases verringert und der innere Gasdruck erhöht wird.

Im zweiten Vergasungsbereich der Gasleitung 4 sind zwei in Strömungsrichtung S voneinander beabstandete Heizflächen 10a und 10b angeordnet, die zwischen sich eine Heizkammer 11 begrenzen. Die Mündung der Zuführöffnung 6 ist im Bereich der Heizkammer 11 angeordnet, so dass ein Harnstoffpellet 12 in einer Einführrichtung E senkrecht zur Strömungsrichtung S des Gasstoffes in die Heizkammer 11 des Reaktors 1 eingebracht und in der Heizkammer 11 erwärmt und verdampft werden kann. Der dritte Ausströmbereich erstreckt sich schließlich in Strömungsrichtung S von der ausströmseitigen Heizfläche 10b bis zur Ausströmöffnung 3.

Die Heizflächen 10a und 10b erstrecken sich in einer im Wesentlichen senkrecht zur Strömungsrichtung S verlaufenden Ebene, wobei jede der Heizflächen 10a, 10b das Heizelement einer separaten Heizeinheit darstellt. Somit kann die Wärme, die über die Heizflächen 10a, 10b abgegeben wird, unabhängig von der anderen Heizfläche 10a, 10b geregelt werden.

Die Heizflächen 10a, 10b gemäß der Ausführung der Fig. 2 werden von spiralförmigen Heizbändern ausgebildet, so dass die Heizspiralen gleichzeitig Heizfläche 10a, 10b und Heizelement 10 der Heizeinheit 10, 13, 14 sind. Dabei entspricht der Abstand der Spiralwendel in etwa der Dicke der Heizbänder. Es können beispielsweise Bänder aus Heizleiterlegierungen mit einer Stärke von 0,4 bis 0,8 mm und einer Breite von 4 bis 10 mm verwendet werden, die zu einer Heizspirale mit einem Durchmesser von zirka 30 mm aufgerollt werden.

Der Abstand zwischen den auf sich zurückgebogenen Spiralwendeln als Abschnitte der Heizfläche 10a bzw. 10b entspricht der Gasdurchlassöffnung 23 (in Fig. 2 nicht dargestellt) in der Heizfläche 10. Da die lichte Weite der Gasdurchlassöffnung 23 kleiner als die lichte Weite der Zuführöffnung 6 im Reaktormantel 4 ist, sind die Durchlassöffnungen 23 wesentlich kleiner als das Harnstoffpellet 12. Daher verbleibt das Pellet 12 in der Heizkammer 11 und wird dort erwärmt, verdampft und thermisch zersetzt. Da der Großteil der Heizkammer 11 von Heizflächen 10 begrenzt wird, ist innerhalb der Heizkammer 11 eine besonders gleichmäßige Temperaturverteilung möglich, so dass eine schnelle Verdampfung des Pellets 12, beispielsweise bei wenigstens 400 °C, erreicht werden kann.

Im Folgenden wird der Aufbau, die Montage und die Befestigung der Heizeinheiten 10, 13, 14 der erfindungsgemäßen Ausführungsform nach Fig. 2 näher erläutert, wobei zunächst die einströmseitig angeordnete Heizeinheit 10, 13 14 beschrieben wird. Die Heizeinheiten umfassen in dieser Ausführung neben der Heizspirale 10a bzw. 10b als Heizfläche und Heizelement 10 einen Fixierbolzen 13 und einen Kontaktstab 14.

Der Kontaktstab 14 ist am einströmseitigen Ende des zweiten Vergasungsabschnittes angeordnet. Der aus elektrisch leitendem Material bestehende Stab 14 verläuft senkrecht zur Strömungsrichtung S durch zwei sich diametral gegenüberliegende Bohrungen in der Wandung der Gasstoffleitung 4. Die Länge des Kontaktelementes ist so bemessen, dass der Kontaktstab 14 an beiden Enden aus der Gasstoffleitung 4 herausragt.

Der Fixierbolzen 13, welcher ebenfalls aus einem elektrisch leitenden Material besteht, ist mit dem Kontaktstab elektrisch leitend verbunden. Der Fixierbolzen 13 umfasst einen Bolzenkopf 24 mit einer durchgehenden Bohrung, durch welche der Kontaktstab 14 hindurchgeschoben wird. Somit wird der Bolzen 13 in Strömungsrichtung S festgelegt. In Fig. 2 ist der Fixierbolzen 13 zentral in der Gasstoffleitung 4 angeordnet. An den Bolzenkopf 24 schließt sich der Bolzenkörper 25 an, welcher sich in Strömungsrichtung S vom Bolzenkopf 24 ausgehend erstreckt. Der Außendurchmesser des Bolzenkörpers 25 ist geringer als der Durchmesser des Bolzenkopfes 24.

Die bandförmige Heizspirale 10a, welche die einströmseitige Heizfläche 10a bildet, ist zentral in der Gasstoffleitung 4 gehalten. Dazu ist die Spirale 10 auf den Fixierbolzen 13 so aufgesetzt, dass sich der Fixierkörper 25 des Fixierbolzens 13 durch die zentrale Mittelöffnung der Heizspirale 10a erstreckt. Bezüglich der Strömungsrichtung S liegt die einströmseitige Außenfläche der Heizspirale 10a an dem Absatz des Fixierbolzens 13 an, der durch die unterschiedlichen Außendurchmesser des Fixierkörpers 25 und des Fixierkopfes 24 gebildet wird.

In Fig. 2 wird die Heizspirale 10a an ihrem inneren Ende durch den Fixierbolzen 13 und an ihrem äußeren Ende durch die innere Wandung der Gasstoffleitung 4 in Position gehalten.

Um den Heizkörper 10a zu befestigen, ist sowohl das innere Ende der Heizspirale mit dem Fixierkörper 24 des Fixierbolzens 13 als auch das äußere Ende der Heizspirale10a mit der Wandung des Rohrmantels 4 fest, d.h. stets stromleitend verbunden. Die Befestigung kann vorzugsweise durch Verschweißen erfolgen. Es können jedoch auch alternative stoffschlüssige Verbindungen, wie Verstemmen, Verklemmen, oder sonstige geeignete Befestigungsmittel zur Fixierung eingesetzt werden.

Das ausströmseitig angeordnete Heizelement ist bezüglich einer Ebene, die senkrecht zur Strömungsrichtung S durch die Heizkammer 11 verläuft, gespiegelt zum einströmseitigen Heizelement in die Gasstoffleitung 4 eingebaut. Demnach erstreckt sich der Fixierkörper des ausströmseitigen Heizelementes vom Bolzenkopf entgegen der Strömungsrichtung S auf den Fixierkörper 13 des einströmseitigen Heizelementes 10a zu. Die Heizspirale 10b ist ebenfalls durch den Fixierkörper zentral gehalten.

Im Betrieb des thermischen Reaktors 1 wird an der Kontaktstelle 7 des Kontaktstabes 14 eine Stromquelle angeschlossen. Beim Anlegen einer Spannung fließt ein Strom durch den Kontaktstab 14 über den Bolzenkopf 24 und den Bolzenkörper 25, vom inneren Ende der Heizspirale 10a durch die Heizspirale bis zum äußeren Ende der Heizspirale 10a. Das äußere Ende der Heizspirale ist elektrisch leitend an der inneren Wandung der Gasleitung 4 auf Masse gelegt, wodurch der Stromkreis geschlossen wird.

Bei diesem Stromverlauf ist es notwendig, den Kontaktstab 14 gegenüber der Gasleitung 4 elektrisch zu isolieren. Zu diesem Zweck sind Isolierhülsen 15, die den Kontaktstab 14 umschließen, in jeder Bohrung der Gasstoffleitung 4 angeordnet, durch welche sich Teile der Kontaktstäbe 14 erstrecken.

Die Isolierhülse 15 weist einen Hülsenkörper 26 und einen Hülsenkragen 27 auf. Der Hülsenkörper erstreckt sich von der Bohrung in der Gasstoffleitung 4 an der einen Seite bis zum Bolzenkopf 24 des Fixierbolzens 13 an der anderen Seite. Auf diese Weise wird der Fixierbolzen zentral in der Gasstoffleitung 4 angeordnet, da er zwischen den zwei Hülsenkörpern 26 eingeklemmt wird, die sich diametral gegenüberliegend den Kontaktstab 14 umschließen.

Der Hülsenkragen 27 liegt außerhalb der Gasstoffleitung 4 und weist einen größeren Außendurchmesser als der Hülsenkörper 26 auf. Auf diese Weise bildet der Hülsenkragen 27 gleichzeitig eine Isolierscheibe, die an der äußeren Wandung des Reaktormantels 4 aufliegt.

Um die Isolierhülsen 15 und dem Kontaktstab 14 zu befestigen und somit den Fixierbolzen 13 in der zentralen Position zu halten, sind auf beiden Seiten des Kontaktstabes Schraubverbindungen vorgesehen.

Die äußeren Enden des Kontaktstabes 14 sind dazu mit einem Außengewinde versehen, auf welches an jedem Ende je eine Unterlegscheibe 16 und eine Mutter 17 aufgeschraubt ist, welche die Heizeinheit aus Kontaktstab 14, Fixierbolzen 13 und Heizelement 10 in der Gasleitung 4 befestigen. Selbstverständlich können anstatt der Schraube-Mutter-Verbindung auch alternative Befestigungsmittel wie beispielsweise Clips verwendet werden, um die Einheit an der richtigen Stelle zu halten.

Um die Heizkammer 11 auch aus radialer Richtung zu beheizen, kann eine gut wärmeleitende Isolierschicht 30, beispielsweise eine Hülse aus Mikanit, entlang der Innenwandung der Gasstoffleitung 4 im Vergasungsraum eingesetzt sein. Diese Innenisolierung stellt dann eine Wärmesenke 30 dar, welche die Heizkammer 11 mantelförmig umgibt und die Kammer 11 radial über die Mantelfläche der Wärmesenke 30 beheizt. Die Isolierschicht 30 müsste lediglich an einer Stelle, dort wo das äußere Ende der Heizspirale 10 auf Masse am Gehäuse der Gasstoffleitung 4 anliegt, unterbrochen sein.

Um die Temperatur der Heizkammer 11 zu regein, sind die Kontaktstäbe 14 an einer Seite mit einer zentralen Messbohrung 18 versehen. Die Messbohrung 18 erstreckt sich entlang der Längsachse des Stabes 14 bis etwa zur Mitte des Stabes. Somit kann in die Messbohrung 18 ein Temperatursensor eingeführt werden, durch den die Temperatur an den Heizflächen 10a, 10b bzw. in der Heizkammer 11 bestimmt werden kann.

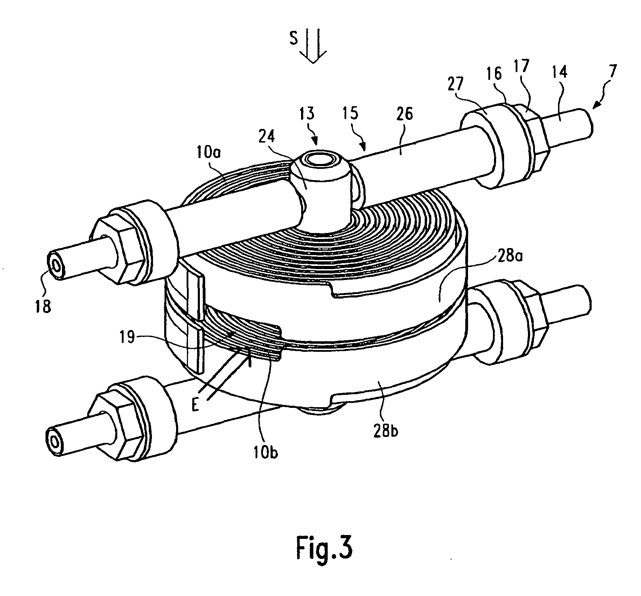

Fig. 3 zeigt eine schematische Ansicht der beiden Heizeinheiten, die verdeutlicht, wie die Heizelemente (10, 13, 14) im zweiten Vergasungsbereich des Thermolysereaktors 1 (in Fig. 3 nicht dargestellt) angeordnet sind. Für gleiche Teile, deren Aufbau und/oder Funktion ähnlich oder identisch von Teilen der vorherigen Figuren ist, werden die gleichen Bezugszeichen verwendet.

Die Heizeinheiten 10, 13, 14 umfassen eine Heizfläche 10a bzw. 10b, die gleichzeitig das Heizelement 10 der Heizeinheit 10, 13, 14 ist, einen Fixierbolzen 13, an dem die Heizfläche 10a, 10b befestigt ist und einen Kontaktstab 14 für den Anschluss der Heizeinheit 10, 13, 14 an eine Spannungsquelle (nicht dargestellt) und zur Halterung des Fixierbolzens 13.

Fig. 3 zeigt, wie die Isolierkörper 27 der Isolierhülsen 15 die Kontaktstäbe 14 gegenüber den Heizspiralen 10a und 10b isolieren. Außerdem ist ersichtlich, dass die Muttern 17 an beiden Enden des Kontaktstabes 14 die Isolierhülsen 15 auf dem Kontaktstab 14 befestigen und gleichzeitig den Fixierbolzen 13 in der Mitte des Stabes 14 festlegen. Des Weiteren ist gut zu erkennen, dass die Heizspiralen 10a und 10b am Bolzenkopf 24 des Fixierbolzens 13 anliegen und vom Fixierbolzen 13 zentral gehalten werden.

Schließlich zeigt Fig. 3, dass der äußere Heizspiralwendel 28a und 28b der Heizspiralen 10a und 10b entlang der Achse der Strömungsrichtung S in Richtung der Heizkammer 11 ausgestellt sind. Auf diese Weise bilden die beiden äußeren Heizspiralwendel 28a und 28b der Heizspiralen 10a und 10b eine Wand, welche die Heizkammer 11 in radialer Richtung umschließt. Dabei dürfen die beiden äußeren Heizspiralwendel 28a und 28b jedoch nicht soweit ausgestellt werden, dass sie sich berühren.

Ferner ist zu beachten, dass die äußeren Spiralwendel 28a und 28b die Heizspiralen 10a und 10b nicht komplett umrunden. Auf diese Weise verbleibt eine Einlassöffnung 19, durch welche der Harnstoffpellet 12 in die Heizkammer 11 eingebracht werden kann. Die Einlassöffnung 19 liegt zwischen dem äußeren Ende der Heizspirale und der Stelle, an welchen die Spiralwendel 28 ausgestellt werden.

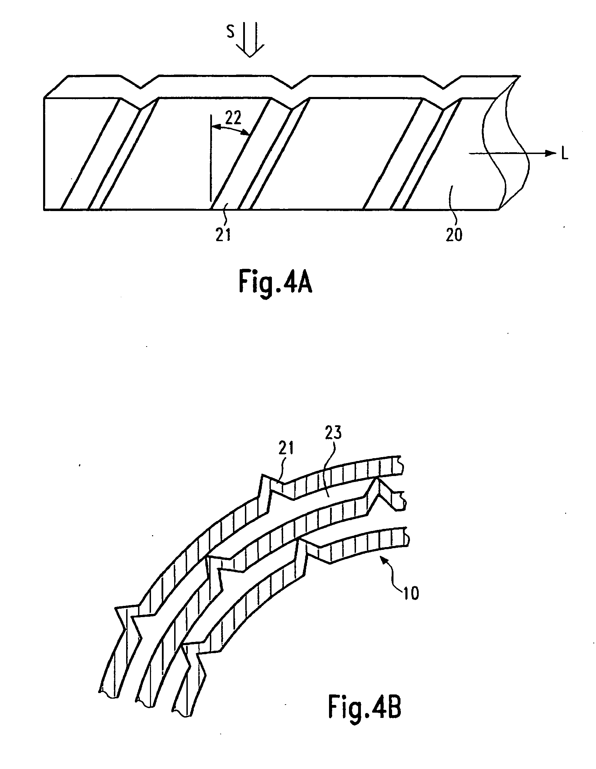

Die Fig. 4A und 4B zeigen schematische Ansichten einer besonderen Ausführungsform der erfindungsgemäßen Heizflächen. Es wird nur auf die Unterschiede zu der oben beschriebenen Ausführungsform eingegangen. Für gleiche Teile, deren Aufbau und/oder Funktion ähnlich oder identisch von Teilen der vorherigen Ausführungsform ist, werden die gleichen Bezugszeichen wie in den vorangegangenen Figuren verwendet.

In Fig. 4A ist ein Heizband 20 im abgewickelten Zustand gezeigt, welches zu einer Heizspirale 10, wie sie abschnittsweise in Fig. 4B dargestellt ist, aufgewickelt werden kann.

Das Heizband 20 ist in regelmäßigen Abständen mit Bereichen versehen, welche aus der Fläche des Heizbandes 20 auswölbend herausragen. Die auswölbenden Profilierungen 21 der Fig. 4A sind als dreieckige Sicken 21 geprägt, die über die komplette Breite des Heizbandes 20 verlaufen. Die Profilierungen 21 verlaufen nicht senkrecht zur Längsrichtung L des Heizbandes 20, sondern sind unter einem Neigungswinkel 22 schräg zur Längsachse L gefertigt. Auf diese Weise dienen die Prägungen 21 als Strömungselemente, welche den Abgasstrom, der senkrecht auf die flache Seite des Heizbandes 20 trifft, was durch die Strömungsrichtung S angedeutet wird, abgelenkt und verwirbelt.

Selbstverständlich kann der Neigungswinkel 22 der Prägungen 21 an die Anforderungen im thermischen Reaktor 1 angepasst werden. Ferner muss die Prägung 21 nicht zwangsläufig linear verlaufen, sondern kann einen beliebigen, zur Verwirbelung der Abgasluft geeigneten Verlauf annehmen.

Fig. 4B zeigt abschnittsweise eine schematische Aufsicht eines aufgerollten Heizbandes gemäß Fig. 4A.

Diese Darstellung verdeutlicht, dass die Profilierungen 21 nicht nur als Strömungsleitkörper dienen, wie oben beschrieben, sondern auch Abstandshalter 21 zwischen benachbarten Spiralwendein des aufgerollten Heizbandes 20 darstellen. Somit kommt es zwar zu Berührungen von Schleifen der Heizspirale 10, die jedoch aufgrund der geringen Potentialdifferenz in der Heizspirale 10 keine negativen Auswirkungen haben. Ferner dienen die Abstandshalter auch zur Festlegung der Durchströmungsöffnungen 23 der aufgerollten Heizspiralen 10. Die Durchlassöffnung 23 lässt sich somit auf einfache Weise durch die Dicke der Abstandshalter 21 definieren.

Alternativ zu den Prägungen 21 können auch Abstandshalter auf ein ebenes Heizband 20 aufgebracht, beispielsweise aufgeklebt oder aufgeklemmt werden. Verwendet man hierbei Abstandshalter 21 aus einem isolierenden Material, so findet mit den Abstandshaltem 21 gleichzeitig eine Isolierung der aufeinander folgenden Spiralwendungen der Heizspirale 10 statt.

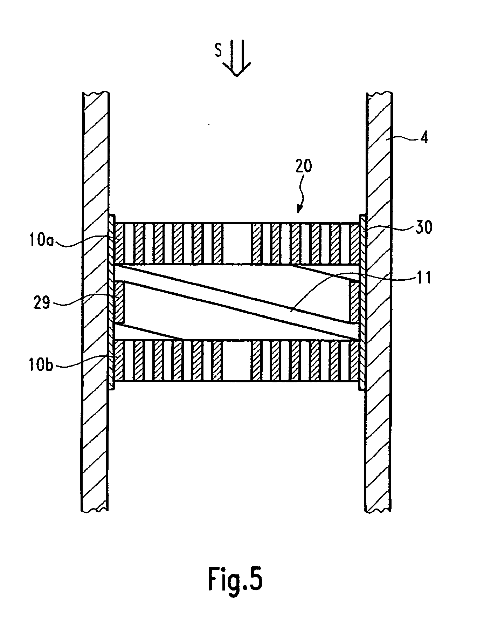

In der Fig. 5 ist eine schematische Darstellungen einer weiteren Ausführungsform der erfindungsgemäßen Heizvorrichtung gezeigt. Die Kontaktstäbe 14 und die Befestigungsmittel 13 sind der Übersichtlichkeit halber weggelassen worden. Für gleiche Teile, deren Aufbau und/oder Funktion ähnlich oder identisch von Teilen der vorherigen Ausführungsformen ist, werden die gleichen Bezugszeichen wie in den vorangegangenen Figuren verwendet.

Fig. 5 zeigt, dass die beiden in Strömungsrichtung S voneinander beabstandeten, gasdurchlässigen Heizflächen 10a und 10b, die eine Heizkammer 11 begrenzen, Abschnitte eines einzigen Heizbandes 20 sein können. Das eine Ende des Heizbandes 20 ist zunächst wie oben beschrieben zu einer ersten ebenen Heizfläche 10a spiralförmig von innen nach außen aufgewickelt. Diese erste Heizspirale 10a erstreckt sich in Strömungsrichtung S eines Gasstromes stromauf einer zweiten Heizspirale 10b, welche aus dem anderen Ende des Heizbandes 20 gebildet ist.

Das äußere Ende der ersten Heizspirale 10a ist jedoch nicht an der Wandung der Gasstoffleitung 4 auf Masse gelegt und endet dort, sondern verläuft in einem sich schraubförmig windenden Abschnitt 29 in Strömungsrichtung S entlang der inneren Wandung der Gasstoffleitung 4. Die Länge des sich schraubförmig windenden Heizbandabschnittes 29 bestimmt somit die Höhe der Heizkammer 11.

Um die Berührung des schraubförmigen Heizbandabschnittes mit der Wand der Gasstoffleitung 4 zu vermeiden, ist an der inneren Wandung eine Isolierschicht 30 angebracht. Die Isolierschicht 30 verhindert erstens, dass das Heizband 20 im Schraubabschnitt 29 an der Gasstoffleitung 4 auf Masse liegt. Zweitens kann, wenn die Isolierschicht 30 aus einem wärmeleitenden Material besteht, die Heizkammer 11 auch aus radialer Richtung über die isolierende Wärmesenke 30 beheizt werden.

Schließlich endet das Heizband 20 in einer abströmseitigen Heizspirale 10b, welche der anströmseitigen Heizspirale 10a entspricht und von außen nach innen gerollt ist.

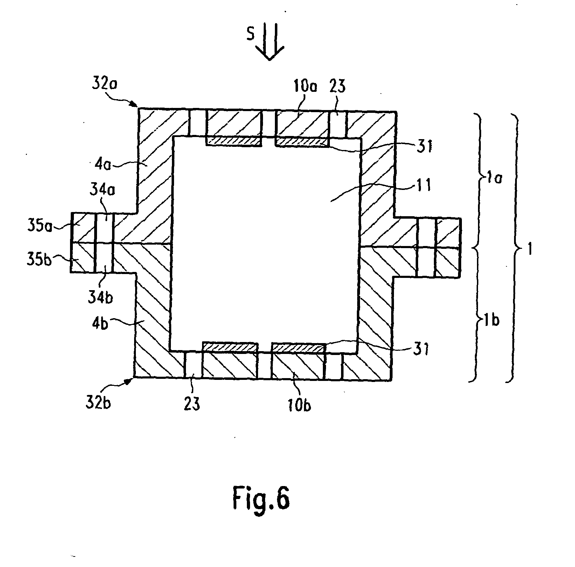

Es können beliebige Heizsysteme als Heizelemente, beispielsweise Dickschichtheizungen 31, eingesetzt werden, welche die über die Heizflächen 10a, 10b abgegebene Wärme erzeugen. Dies ist in Fig. 6 gezeigt. Für Teile, deren Aufbau und/oder Funktion ähnlich oder identisch von Teilen der vorherigen Figuren ist, werden wiederum die gleichen Bezugszeichen verwendet. Der Übersicht halber wird wiederum auf die elektrische Kontaktierung der Heizeinheiten verzichtet.

Der thermische Reaktor 1 dieser Ausführungsform besteht aus einer einströmseitigen Heizeinheit 1a und einer ausströmseitigen Heizeinheit 1b, die miteinander verbunden die Heizvorrichtung bzw. den thermischen Reaktor 1 bilden. Die beiden Heizeinheiten 1 a und 1 b sind identisch aufgebaut, deshalb wird nachfolgend das einströmseitige Heizeinheit 1 a beschrieben.

Die Heizeinheit 1 a umfasst eine Dickschichtheizung 31 auf einem Trägerelement 32a mit einer Heizfläche 10a, einem gasleitenden Mantelabschnitt 4a und einem Flansch 35a. Das Trägerelement 32a ist im Wesentlichen zylinderförmig aufgebaut, wobei die Heizfläche 10a die Grundfläche des Zylinders und der Rohrabschnitt 4a den Zylindermantel bilden. Das Trägerelement 32a ist also im Wesentlichen topf- oder tonnenförmig ausgebildet, wobei die Heizfläche 10a den Boden und die Mantelfläche 4a die Wand des Topfes darstellt.

In der Heizfläche 10a sind mehrere Gasdurchlassöffnungen 23 ausgebildet, so dass diese Fläche vom Gasstrom in einer Strömungsrichtung S durchströmbar ist. Der Mantel 4a hingegen ist gasundurchlässig und stellt die Gasstoffleitung 4 des thermischen Reaktors 1 dar.

Die Dickschichtheizungen 31 sind an der Heizfläche 10a im Inneren des topfförmigen Trägerelementes 32a so angebracht, dass sie die Gasdurchlassöffnungen 23 nicht verdecken. Die von den Dickschichtheizungen 31 produzierte Wärme wird auf das Trägerelement 32a, bzw. 32b, welche eine einteilige Wärmesenke 32 mit einer Heizfläche 10a und einem Mantelabschnitt 4a darstellt, übertragen. Die Dickschichtheizungen 31 können selbstverständlich auch an jeder beliebigen Stelle mit dem Trägerelement 32a wärmeleitend verbunden sein.

Der Flansch 35a des Trägerelementes 32a ist in Form eines am Rohrabschnitt 4a außen umlaufenden Kragen an dem Ende des Gasstoffleitungsabschnittes 4a ausgebildet, welcher der Heizfläche 10a gegenüber liegt.

Das ausströmseitige Heizelement 1b des thermischen Reaktors 1 ist in seinem Aufbau mit dem einströmseitigen Heizelement 1 identisch. Die beiden Heizelemente 1a und 1b sind an ihren Flanschzonen 35a und 35b miteinander verbunden. In Fig. 6 weisen die Flanschzonen 35a und 35b der beiden Heizelemente 1 a und 1b beispielsweise zueinander fluchtenden Befestigungsöffnungen 34a und 34b auf, die der Aufnahme von Verbindungsmittel, wie Schrauben oder Klemmen (in Fig. 6 nicht dargestellt) dienen können.

Auf diese Weise bilden die beiden Heizeinheiten 1 a und 1b einen thermischen Reaktor 1 mit einer Heizkammer 11, die von den Trägerelemente 32a und 32b begrenzt wird. Die beiden Heizflächen 10a und 10b sind voneinander beabstandet und begrenzen die Heizkammer 11 in Strömungsrichtung S, während die beiden Mantelabschnitte 4a und 4b der Heizeinheiten 1a und 1b die Gasstoffleitung 4 des thermischen Reaktors 1 bilden.

Die obigen Ausführungsformen stellen lediglich beispielhafte Ausgestaltungen dar, deren Merkmale beliebig kombiniert und modifiziert werden können. So ist insbesondere die Ausgestaltung der abstandshaltenden Prägungen 21 der Heizbänder 20 beliebig variabel. Ferner könnte auch ein Heizdraht oder ein Rohrheizkörper, welcher von einem Heizmedium durchflossen wird, anstelle eines Heizbandes 20 eingesetzt werden. Weiterhin kann jede andere Art eines elektrischen Heizsystems, wie auch ein Heizsystem auf induktiver Basis, verwendet werden. Auch eine Ausführung, bei der die Heizelemente 11 von Heizflächen 10a, 10b aus elektrisch leitfähig Keramik gebildet wird, ist möglich.

## Patentansprüche

1. Heizvorrichtung zur Erwärmung und Vergasung von Harnstoff (12) oder einer Harnstofflösung, insbesondere für Verbrennungskraftmaschinen, die in eine sich in einer Strömungsrichtung (S) erstreckende Gasstoffleitung (4) einbaubar ausgestaltet ist und die wenigstens zwei in Strömungsrichtung (S) voneinander beabstandete, gasdurchlässige Heizflächen (10a, 10b) aufweist, die eine Heizkammer (11) begrenzen, **gekennzeichnet durch** eine zwischen den wenigstens zwei Heizflächen (10a, 10b) in die Heizkammer (11) mündende Einlassöffnung (19), **durch** welche der Harnstoff (12) oder die Harnstofflösung in die Heizkammer (11) einbringbar ist.

2. Heizvorrichtung nach Anspruch 1, **dadurch gekennzeichnet, dass** die Heizflächen (10) sich in einer im Wesentlichen senkrecht zur Strömungsrichtung (S) verlaufenden Ebene erstrecken.

3. Heizvorrichtung nach Anspruch 1 oder 2, **dadurch gekennzeichnet, dass** die Heizvorrichtung wenigstens zwei Heizelemente (10, 31) umfasst, wobei jede der Heizflächen (10a, 10b) jeweils einem separaten Heizelement (10, 31) zugeordnet ist.

4. Heizvorrichtung nach einem der oben genannten Ansprüche, **dadurch gekennzeichnet, dass** eine Wärmesenke (30, 32) vorgesehen ist, welche die Heizkammer (11) mantelförmig umgibt und in Wärmeübertragungsverbindung mit wenigstens einem Heizelement (10, 31) steht.

5. Heizvorrichtung nach einem der oben genannten Ansprüche, **dadurch gekennzeichnet, dass** wenigstens eine Heizfläche (10) von einer Wärmesenke (30, 32) gebildet ist und dass die Wärmesenke (30, 32) in Wärmeübertragungsverbindung mit wenigstens einem Heizelement (10, 31) steht.

6. Heizvorrichtung nach Anspruch 4 oder 5, **dadurch gekennzeichnet, dass** die Wärmesenke (30, 32) einteilig wenigstens eine Heizfläche (10) und einen Abschnitt der Mantelfläche (4) der Heizkammer (11) ausbildet.

7. Heizvorrichtung nach einem der oben genannten Ansprüche, **dadurch gekennzeichnet, dass** wenigstens eine der Heizflächen (10a, 10b) zumindest abschnittsweise von einer Heizspirale (10a, 10b) gebildet ist.

8. Heizvorrichtung nach Anspruch 7, **dadurch gekennzeichnet, dass** die Heizspirale (10) ein aufgerolltes Heizband (20) umfasst.

9. Heizvorrichtung nach einem der oben genannten Ansprüche, **dadurch gekennzeichnet, dass** die Heizflächen (10a, 10b) Gasdurchlassöffnungen (23) mit einer lichte Weite aufweisen, die kleiner als die lichte Weite der Einführöffnung (19) ist.

10. Heizvorrichtung nach einem der oben genannten Ansprüche, **dadurch gekennzeichnet, dass** wenigstens eine Heizfläche (10a, 10b) aus einer Mehrzahl von benachbarten Heizabschnitten besteht, die durch Abstandshalter (21) voneinander beabstandet gehalten sind und so die Gasdurchströmungsöffnungen (23) bilden.

11. Heizvorrichtung nach Anspruch 10, **dadurch gekennzeichnet, dass** in der Heizfläche (10) sich auswölbende Bereiche von Profilierungen (21) als Abstandshalter ausgeformt sind.

12. Heizvorrichtung nach einem der oben genannten Ansprüche, **dadurch gekennzeichnet, dass** die Heizflächen (10) Strömungselemente (21) bilden, durch welche im Betrieb die Durchströmung der Heizkammer (11) verwirbelbar ist.

13. Heizvorrichtung nach Anspruch 10 oder 11, **dadurch gekennzeichnet, dass** die Abstandshalter (21) geneigt zur Strömungsrichtung (S) als Strömungselemente angeordnet sind.

14. Thermischer Reaktor (1) zur Erwärmung und Vergasung von Harnstoff (12) oder einer Harnstofflösung, insbesondere für Verbrennungskraftmaschinen, umfassend eine Heizvorrichtung, eine Einströmöffnung (2), eine Ausströmöffnung (3), wobei die Einström- (2) und die Ausströmöffnung (3) durch eine Gasstoffleitung (4) miteinander verbunden sind und in der Gasstoffleitung (4) ein Vergasungsbereich angeordnet ist, **dadurch gekennzeichnet dass** die Heizvorrichtung eine im Vergasungsbereich angeordnete Heizkammer (11) aufweist, die einströmseitig und ausströmseitig von gasdurchströmbaren Heizflächen (10a, 10b) begrenzt ist und zwischen den Heizflächen (10a, 10b) eine Einlassöffnung (19) für den Harnstoff (12) oder die Harnstofflösung aufweist.

15. Thermischer Reaktor (1) gemäß Anspruch 14, **gekennzeichnet durch** eine Heizvorrichtung gemäß einem der oben genannten Ansprüche.

16. Thermischer Reaktor (1) nach Anspruch 14 oder 15, **dadurch gekennzeichnet, dass** die Gasstoffleitung (4) im Vergasungsbereich eine Zuführöffnung (6) aufweist, welche im Bereich der Heizkammer (11) mündet.

17. Thermischer Reaktor (1) nach Anspruch 16, **dadurch gekennzeichnet, dass** die Zuführöffnung (6) im Bereich der Einlassöffnung (19) der Heizkammer (11) mündet.

18. Thermischer Reaktor (1) nach einem der Ansprüche 14 bis 17, **dadurch gekennzeichnet, dass** die Heizvorrichtung die Gasstoffleitung (4) des thermischen Reaktors (1) zumindest teilweise bildet.

19. Verfahren zum Erwärmen und Vergasen von Harnstoff (12) oder einer Harnstofflösung, insbesondere für Verbrennungskraftmaschinen, wobei eine Gasstoffleitung (4) von einem Gasstrom in einer Strömungsrichtung (S) durchströmt wird, in den Gasstrom Harnstoff (12) oder die Harnstofflösung eingebracht wird und der Harnstoff (12) oder die Harnstofflösung erwärmt und verdampft und mit dem Gasstrom abtransportiert wird, **dadurch gekennzeichnet, dass** der Harnstoff (12) oder die Harnstofflösung zwischen zwei Heizflächen (10a, 10b) in die Gasstoffleitung (4) eingebracht wird.

20. Verfahren nach Anspruch 19, **dadurch gekennzeichnet, dass** der Harnstoff (12) oder die Harnstofflösung im Wesentlichen orthogonal zur Strömungsrichtung (S) zwischen die Heizflächen (10a, 10b) in die Gasstoffleitung (4) eingebracht wird.

21. Verfahren nach einem der Ansprüche 19 oder 20, **dadurch gekennzeichnet, dass** der Harnstoff (12) oder die Harnstofflösung im Wesentliche zwischen den zwei Heizflächen (10a, 10b) verdampft wird.

22. Verfahren nach einem der Ansprüche 19 bis 21, **dadurch gekennzeichnet, dass** der Harnstoff (12) oder die Harnstofflösung bei mindesten 400 °C zersetzt wird.

23. Verfahren nach einem der Ansprüche 19 bis 22, **dadurch gekennzeichnet, dass** Festharnstoff (12) oder die feste Harnstofflösung verdampft wird.

24. Verfahren nach Anspruch 23, **dadurch gekennzeichnet, dass** der Festharnstoff (12) oder die feste Harnstofflösung in Form von Pellets vergast werden.

## Claims

1. A heating device for the heating and gasification of urea (12) or a urea solution, particularly for internal combustion engines, which device is designed for installation in a gas line (4) extending in a direction of flow (S) and which comprises at least two gas-permeable heating surfaces (10a, 10b) that are spaced apart from each other in the direction of flow (S) and that define a heating chamber (11), **characterized by** an inlet opening (19) that discharges into the heating chamber (11) between the at least two heating surfaces (10a, 10b) and through which the urea (12) or the urea solution can be fed into the heating chamber (11).

2. The heating device according to claim 1, **characterized in that** the heating surfaces (10) extend in a plane that runs essentially perpendicular to the direction of flow (S).

3. The heating device according to claim 1 or 2, **characterized in that** the heating device comprises at least two heating elements (10, 31), wherein each of the heating surfaces (10a, 10b) is allocated to a separate heating element (10, 31).

4. The heating device according to any one of the aforementioned claims, **characterized in that** a heat sink (30, 32) is provided that surrounds the heating chamber (11) in the form of a casing and that is in a heat transfer connection with at least one heating element (10, 31).

5. The heating device according to any one of the aforementioned claims, **characterized in that** at least one heating surface (10) is formed by a heat sink (30, 32) and that the heat sink (30, 32) is in a heat-transfer connection with at least one heating element (10, 31).

6. The heating device according to claim 4 or 5, **characterized in that** the heat sink (30, 32), in one piece, forms at least one heating surface (10) and a section of the casing (4) of the heating chamber (11).

7. The heating device according to any one of the aforementioned claims, **characterized in that** at least one of the heating surfaces (10a, 10b) is formed from a heating spiral (10a, 10b), at least in sections.

8. The heating device according to claim 7, **characterized in that** the heating spiral (10) comprises a rolled up heating band (20).

9. The heating device according to any one of the aforementioned claims, **characterized in that** the heating surfaces (10a, 10b) have gas-permeation openings (23) with a clearance width that is smaller than the clearance of the inlet opening (19).

10. The heating device according to any one of the aforementioned claims, **characterized in that** at least one heating surface (10a, 10b) comprises a plurality of adjacent heating sections, which are held at a distance from one another by spacers (21) and that way form the gas-flow openings (23).

11. The heating device according to claim 10, **characterized in that** bulged areas of profiles (21) are formed in the heating surface (10) as spacers.

12. The heating device according to any one of the aforementioned claims, **characterized in that** the heating surfaces (10) form flow elements (21) by means of which the flow in the heating chamber (11) can be swirled during operation.

13. The heating device according to claim 10 or 11, **characterized in that** the spacers (21) are arranged inclined to the direction of flow (S) as flow elements.

14. A thermal reactor (1) for the heating and gasification of urea (12) or a urea solution, particularly for internal combustion engines, comprising a heating device, an intake opening (2) and an exhaust opening (3), wherein the intake opening (2) and the exhaust opening (3) are connected to each other by a gas line (4) and wherein a gasification area is arranged in the gas line (4), **characterized in that** the heating device comprises a heating chamber (11) arranged in the gasification area, said heating chamber being defined on the intake and exhaust sides by heating surfaces (10a, 10b) through which the gas can pass and that the heating chamber has an inlet opening (19) for the urea (12) or the urea solution between the heating surfaces (10a, 10b).

15. The thermal reactor (1) according to claim 14, **characterized by** a heating device according to any one of the aforementioned claims.

16. The thermal reactor (1) according to claim 14 or 15, **characterized in that** the gas line (4) has a feed opening (6) in the gasification area, said feed opening discharging into the area of the heating chamber (11).

17. The thermal reactor (1) according to claim 16, **characterized in that** the feed opening (6) discharges in the area of the inlet opening (19) of the heating chamber (11).

18. The thermal reactor (1) according to any one of claims 14 to 17, **characterized in that** the heating device at least partially forms the gas line (4) of the thermal reactor (1).

19. A method for heating and gasifying urea (12) or a urea solution, particularly for internal combustion engines, wherein a gas flow flows through a gas line (4) in a direction of flow (S), wherein the urea (12) or the urea solution is fed into the gas flow and the urea (12) or urea solution is heated and vaporized and removed with the gas flow, **characterized in that** the urea (12) or the urea solution is fed into the gas line (4) between two heating areas (10a, 10b).

20. The method according to claim 19, **characterized in that** the urea (12) or the urea solution is essentially fed into the gas line (4) between the heating surfaces (10a, 10b) orthogonally to the direction of flow (S).

21. The method according to any one of claims 19 or 20, **characterized in that** the urea (12) or the urea solution is essentially vaporized between the two heating surfaces (10a, 10b).

22. The method according to any one of claims 19 to 21, **characterized in that** the urea (12) or the urea solution is pyrolyzed at a temperature of at least 400°C.

23. The method according to any one of claims 19 to 22, **characterized in that** solid urea (12) or the solid urea solution is vaporized.

24. The method according to claim 23, **characterized in that** the solid urea (12) or the solid urea solution in the form of pellets is gasified.

## Revendications

1. Dispositif de chauffage pour chauffer et vaporiser l'urée (12) ou une solution d'urée, en particulier pour des moteurs à combustion interne, lequel est configuré pour pouvoir être mis en place dans une conduite de gaz (4), qui s'étend dans la direction d'écoulement (S), et lequel comporte au moins deux surfaces de chauffage (10a, 10b) perméables au gaz, qui sont situées à distance l'une de l'autre dans la direction d'écoulement (S) et qui délimitent une chambre de chauffage (11), **caractérisé par** une ouverture d'entrée (19), qui débouche dans la chambre de chauffage (11) entre lesdites au moins deux surfaces de chauffage (10a, 10b) et par laquelle l'urée (12) ou la solution d'urée peut être introduite dans la chambre de chauffage (11).

2. Dispositif de chauffage selon la revendication 1, **caractérisé en ce que** les surfaces de chauffage (10) s'étendent dans un plan orienté sensiblement perpendiculairement à la direction d'écoulement (S).

3. Dispositif de chauffage selon la revendication 1 ou 2, **caractérisé en ce que** le dispositif de chauffage comporte au moins deux éléments de chauffage (10, 31), respectivement un élément de chauffage (10, 31) séparé étant associé à chacune des surfaces de chauffage (10a, 10b).

4. Dispositif de chauffage selon l'une des revendications précédentes, **caractérisé en ce qu'**il est prévu un dissipateur thermique (30, 32), qui entoure en formant couverture la chambre de chauffage (11) et qui est en liaison de transmission de chaleur avec au moins un élément de chauffage (10, 31).

5. Dispositif de chauffage selon l'une des revendications précédentes, **caractérisé en ce qu'**au moins une surface de chauffage (10) est formée par un dissipateur thermique (30, 32) et **en ce que** le dissipateur thermique (30, 32) est en liaison de transmission de chaleur avec au moins un élément de chauffage (10, 31).

6. Dispositif de chauffage selon la revendication 4 ou 5, **caractérisé en ce que** le dissipateur thermique (30, 32) forme d'un seul tenant au moins une surface de chauffage (10) et une partie de la chemise (4) de la chambre de chauffage (11).

7. Dispositif de chauffage selon l'une des revendications précédentes, **caractérisé en ce qu'**au moins une des surfaces de chauffage (10a, 10b) est formée au moins par section par une spirale de chauffage (10a, 10b).

8. Dispositif de chauffage selon la revendication 7, **caractérisé en ce que** la spirale de chauffage (10) comporte une bande de chauffage (20) enroulée.

9. Dispositif de chauffage selon l'une des revendications précédentes, **caractérisé en ce que** les surfaces de chauffage (10a, 10b) comportent des orifices de passage du gaz (23) avec une largeur intérieure inférieure à la largeur intérieure de l'ouverture d'entrée (19).

10. Dispositif de chauffage selon l'une des revendications précédentes, **caractérisé en ce qu'**au moins une surface de chauffage (10a, 10b) est formée par une pluralité de parties de chauffe adjacentes, qui sont maintenues à distance les unes des autres par des écarteurs (21) et forment ainsi les orifices de passage du gaz (23).

11. Dispositif de chauffage selon la revendication 10, **caractérisé en ce que** des zones concaves de profilage (21) sont réalisées pour former des écarteurs dans la surface de chauffage (10).

12. Dispositif de chauffage selon l'une des revendications précédentes, **caractérisé en ce que** les surfaces de chauffage (10) forment des éléments d'écoulement (21), par lesquels le courant traversant la chambre de chauffage (11) peut être mis en tourbillons en cours de service.

13. Dispositif de chauffage selon la revendication 10 ou 11, **caractérisé en ce que** les écarteurs (21) pour former des éléments d'écoulement sont inclinés dans la direction d'écoulement (S) .

14. Réacteur thermique (1) pour chauffer et vaporiser l'urée (12) ou une solution d'urée, en particulier pour des moteurs à combustion interne, comportant un dispositif de chauffage, une ouverture d'afflux (2), une ouverture d'évacuation (3), l'ouverture d'afflux (2) et l'ouverture d'évacuation (3) étant reliées l'une à l'autre par une conduite de gaz (4), et une zone de vaporisation étant située dans la conduite de gaz (4), **caractérisé en ce que** le dispositif de chauffage comporte une chambre de chauffage (11), qui est disposée dans la zone de vaporisation et qui, du côté afflux et du côté évacuation, est délimitée par des surfaces de chauffage (10a, 10b) perméables au gaz et comporte, entre les surfaces de chauffage (10a, 10b), une ouverture d'entrée (19) de l'urée (12) ou de la solution d'urée.

15. Réacteur thermique (1) selon la revendication 14, **caractérisé par** un dispositif de chauffage selon l'une des revendications précédentes.

16. Réacteur thermique (1) selon la revendication 14 ou 15, **caractérisé en ce que** la conduite de gaz (4) comporte dans la zone de vaporisation une ouverture d'admission (6) qui débouche dans la zone de la chambre de chauffage (11).

17. Réacteur thermique (1) selon la revendication 16, **caractérisé en ce que** l'ouverture d'admission (6) débouche dans la zone de l'ouverture d'entrée (19) de la chambre de chauffage (11).

18. Réacteur thermique (1) selon l'une des revendications 14 à 17, **caractérisé en ce que** le dispositif de chauffage forme au moins en partie la conduite de gaz (4) du réacteur thermique (1).

19. Procédé pour chauffer et vaporiser l'urée (12) ou une solution d'urée, en particulier pour des moteurs à combustion interne, un flux de gaz circulant dans la conduite de gaz (4) dans une direction d'écoulement (S), l'urée (12) ou la solution d'urée étant introduite dans le flux de gaz, et l'urée (12) ou la solution d'urée étant chauffée ou vaporisée et étant évacuée avec le flux de gaz, **caractérisé en ce que** l'urée (12) ou la solution d'urée est introduite dans la conduite de gaz (4) entre deux surfaces de chauffage (10a, 10b).

20. Procédé selon la revendication 19, **caractérisé en ce que** l'urée (12) ou la solution d'urée est introduite dans la conduite de gaz (4) sensiblement orthogonalement à la direction d'écoulement (S) entre les surfaces de chauffage (10a, 10b).

21. Procédé selon la revendication 19 ou 20, **caractérisé en ce que** l'urée (12) ou la solution d'urée est vaporisée sensiblement entre les deux surfaces de chauffage (10a, 10b).

22. Procédé selon l'une des revendications 19 à 21, **caractérisé en ce que** l'urée (12) ou la solution d'urée est décomposée à au moins 400°C.

23. Procédé selon l'une des revendications 19 à 22, **caractérisé en ce que** l'urée solide (12) ou la solution d'urée solide est vaporisée.

24. Procédé selon la revendication 23, **caractérisé en ce que** l'urée solide (12) ou la solution d'urée solide est vaporisée sous forme de pastilles.
